# EUROPÄISCHE PATENTSCHRIFT

(11) **EP 0 936 522 B1**
(45) Veröffentlichungstag und Bekanntmachung des Hinweises auf die Patenterteilung: **22.05.2002**
(21) Anmeldenummer: 99103045.3
(22) Anmeldetag: 16.02.1999
(51) Int. Cl.: G05D 7/01, G05D 16/10, B65D 83/14, B67D 5/34, B62D 5/08, B62D 5/06

(54) **Durchflussmengeregler**
Flow regulator
Régulateur de débit

(30) Priorität: 17.02.1998 DE 19806451
(43) Veröffentlichungstag der Anmeldung: 18.08.1999
(73) Patentinhaber: Huthmann, Otto, 27632 Midlum (DE); Huthmann, André, 27632 Midlum (DE)
(72) Erfinder: Huthmann, Otto, 27632 Midlum (DE); Huthmann, André, 27632 Midlum (DE)
(74) Vertreter: von Ahsen, Erwin-Detlef, Dipl.-Ing.

(56) Entgegenhaltungen:
- EP-A- 0 072 732
- CH-A- 645 070
- DE-A- 2 908 881

## Beschreibung

Die Erfindung betrifft einen Durchflußmengenregler zur Regelung der Durchflußmenge von Wasser mit einem in einen Leitungsstrang oder eine Wasserarmatur einschraubbaren Gehäuse.

Durchflußmengenregier sind seit einiger Zeit in verschiedenen Ausführungsformen im Einsatz. Aufgabe der Durchflußmengenregler ist zumeist die Reduktion der Wasserdurchflußmenge, um hierdurch Wasser und somit letztlich Kosten zu sparen. Die Durchflußmengenregler werden zumeist an Wasserhähne anstelle des üblichen Diffusors oder an eine Duscharmatur zwischen der Duscharmatur und den Brauseschlauch geschraubt. Der prinzipielle Aufbau der Durchflußmengenregler ist dabei stets derselbe. Durch eine Drossel im Durchflußmengenregler wird der Durchflußquerschnitt für das Wasser reduziert, so daß nur eine geringere Menge an Wasser durchfließen kann. Nachteilig bei den bekannten Durchflußmengenreglern ist, daß in Abhängigkeit des Vordrucks, das heißt, des in der Wasserleitung herrschenden Wasserdrucks, auch die Durchflußmenge variiert. Zum Beispiel in den Morgenstunden, wenn in vielen Haushalten geduscht wird, nimmt der Wasserdruck im kommunalen Wassernetz stark ab, so daß die zur Verfügung stehende Durchflußmenge ohnehin schon stark reduziert ist. Diese wird durch den bekannten Durchflußmengenregler weiter reduziert, so daß die zur Verfügung stehende Durchflußmenge oft nicht mehr ausreicht, um beispielsweise zu duschen. In Zeiten, in denen hingegen wenig Wasser verbraucht wird, ist der Wasserdruck im kommunalen Wasserleitungsnetz sehr hoch, so daß auch eine entsprechend große Durchflußmenge zur Verfügung steht. Hier ist die Durchflußmenge trotz der bekannten Durchflußmengenregler oft noch so groß, daß sie weiter reduziert werden könnte. Bei den bekannten Durchflußmengenreglern muß stets ein Kompromiß zwischen Phasen niedrigen und hohen Drucks eingegangen werden. Die bekannten Einrichtungen verdienen daher eigentlich nicht den Namen Durchflußmengenregler, sondern müßten genau genommen als Durchflußbegrenzer bezeichnet werden.

Hiervon ausgehend liegt der Erfindung das Problem zugrunde, einen Durchflußmengenregler zu schaffen, bei dem unabhängig vom Vordruck in der Wasserleitung eine stets konstante Durchflußmenge gewährleistet ist.

Erfindungsgemäß wird dieses Problem dadurch gelöst, daß in dem Gehäuse ein in Strömungsrichtung des Wassers beweglich gelagerter Kolben angeordnet ist, der entgegen Strömungsrichtung der Strömung durch ein elastisches. Element belastet ist.

Nach einer ersten Ausgestaltung der Erfindung verkleinert sich in Folge der Bewegung des Kolbens (26) in Stömungsrichtung das Volumen einer Mengenausgleichskammer. Hierdurch ändert sich das Stömungsverhalten des Wassers durch den Druchflußmengenregler, so daß sich auch der Stömungswiderstand ändert. Je größer der Vordruck des Wassers ist, desto kleiner wird dabei das Volumen der Mengenausgleichskammer und folglich der Strömungswiderstand größer. Die Durchflußmenge wird hierdurch unabhängig vom Vordruck konstant gehalten.

Nach einer zweiten Ausgestaltung der Erfindung verkleinert sich ein Ringraum um den Kolben in Folge der Bewegung des Kolbens in Strömungsrichtung. Der Ringraum um den Kolben bildet einen drosselnden Durchfluß für das Wasser. Je nach Vordruck wird der Kolben gegen das elastische Element in Strömungsrichtung des Wassers gedrückt. Je größer der Vordruck ist, desto kleiner wird der freie Querschnitt des Ringraums. Somit erhöht sich in Abhängigkeit der Vordruck die Drosselwirkung des erfindungsgemäßen Durchflußmengenreglers. Die Durchflußmenge wird hierdurch unabhängig vom Vordruck konstant gehalten.

Die beiden vorbeschriebenen Ausgestaltungen können so ausgelegt sein, daß die Durchflußmenge durch jede der beiden Maßnahme für sich konstant gehalten werden. Nach einer konkreten, konstruktiven Ausführungsform werden aber beide Maßnahme gemeinsam so aufeinander abgestimmt eingesetzt, daß die Durchflußmenge unabhängig vom Vordruck konstant gehalten wird.

Nach einer konstruktiven Ausgestaltung der Erfindung wirkt der Kolben mit einem Sitz zusammen, wobei der Kolben und/oder der Sitz in ihren miteinander zusammenwirkenden Bereichen kegelstumpfartig ausgebildet sind. Vorzugsweise verjüngen sich der Kolben und/oder der Sitz in Strömungsrichtung.

Nach einer Weiterbildung der Erfindung weist der Kolben einen kegelstumpfartig ausgebildeten Einlaufkegel auf. Über den Kegelwinkel dieses Einlaufkegels kann der Strömungswiderstand des Kolbens für das Wasser variiert werden. Hierüber läßt sich die gewünschte Durchflußmenge, die der Durchflußregler vordruckunabhängig gewährleisten soll, einstellen. Dieses geschieht auf empirischem Weg. Soll bei vorgegebenem Kegelwinkel für den Einlaufkegel die Wassermenge weiter reduziert und somit der Strömungswiderstand erhöht werden, kann dies durch Eindrehen von Rillungen in Umfangsrichtung des Einlaufkegels variiert werden.

Weitere Merkmale der Erfindung beziehen sich auf die konstruktive Ausgestaltung des Durchflußmengenreglers.

Die Erfindung wird nachfolgend beispielhaft anhand der Zeichnung näher erläutert. In dieser zeigen:
- Fig. 1: einen Durchflußmengenregler mit den Erfindungsmerkmalen zum Einbau in einen Wasserleitungsstrang, beispielsweise zwischen Armatur und Brauseschlauch,
- Fig. 2: einen Durchflußmengenregler mit den Erfindungsmerkmalen zum Einschrauben in einen Wasserhahn

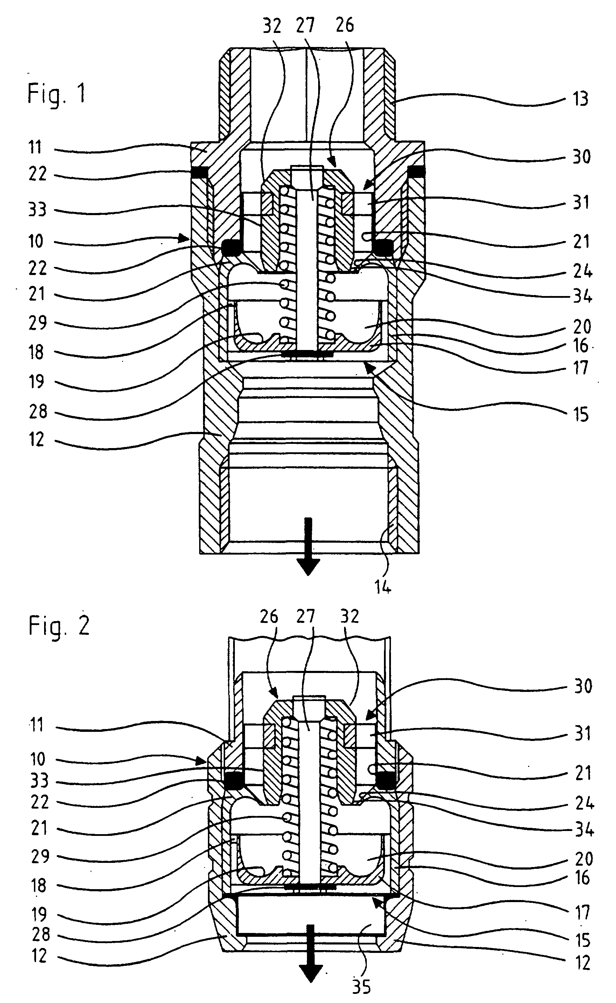

Fig. 1 und 2 zeigen Durchflußmengenregler, die hinsichtlich ihrer Wirkungsweise gleich ausgebildet sind. Sie unterscheiden sich im wesentlichen nur durch den Einsatzort. Der Durchflußmengenregler gemäß Fig. 1 kann in einen Wasserleitungsstrang, beispielsweise zwischen eine Duscharmatur und einen Brauseschlauch, eingeschraubt werden. Der Durchflußmengenregler gemäß Fig. 2 ist zum Einschrauben in einen Wasserhahn vorgesehen.

Der Durchflußmengenregler gemäß Fig. 1 weist ein Gehäuse 10 auf, welches aus einem oberen Gehäuseteil 11 und einem unteren Gehäuseteil 12 gebildet ist. Das obere und untere Gehäuseteil 11 und 12 sind, wie in Fig. 1 erkennbar, ineinandergeschraubt. Das obere Gehäuseteil 11 weist an seinem oberen Ende ein weiteres Gewinde 13 auf. Entsprechend weist das untere Gehäuseteil 12 ein korrespondierendes Gewinde 14 auf. Im vorliegenden Fall ist das Gewinde 13 ein Außengewinde, während das Gewinde 14 ein Innengewinde ist. Das Gehäuse 10 kann so in einen Wasserleitungsstrang, beispielsweise zwischen eine Duscharmatur und einen Brauseschlauch eingeschraubt werden. Je nach Einsatzort kann auch das Gewinde 13 ein Innengewinde und das Gewinde 14 ein Außengewinde sein. Wichtig ist nur, daß das obere Gehäuseteil 11, in Strömungsrichtung gesehen, stromaufwärts angeordnet ist. Die Gewinde 13 und 14 weisen jeweils den für Wasserleitungen bzw. Armaturen typischen Gewindetyp auf.

In den unteren Gehäuseteil 12 ist ein Einsatz 15 angeordnet. Dieser besteht einstückig aus einem äußeren Ring 16 und einem darin angeordneten Bodenstück 17, welches über Stege 18 mit dem Ring 16 verbunden ist. Durch Öffnungen zwischen dem Ring 16 und dem Bodenstück 17 kann das Wasser hindurchströmen.

Das Bodenstück 17 selbst weist auf seiner angeströmten Seite eine umlaufende Ausdrehung 19 auf. Diese bildet eine Mengenausgleichskammer 20 im Bodenstück 17.

Oberhalb des Einsatzes 15 ist in dem unteren Gehäuseteil 12 noch ein Sitz 21 angeordnet. Dieser Sitz 21 ist zusammen mit dem Einsatz 15 durch Einschrauben des oberen Gehäuseteils 11 in den unteren Gehäuseteil 12 verspannt. Eine Dichtung 22 sorgt für einen dichtenden Abschluß zwischen dem oberen Gehäuseteil 11 und dem Sitz 21. Eine weitere Dichtung 23 ist zwischen dem oberen und unteren Gehäuseteil angeordnet.

Der Sitz 21 weist eine kegelstumpfartig ausgebildete, sich im Strömungsrichtung verjüngende Sitzfläche 24 auf. Ein Ansatz 25 des Sitzes 21 ist nach oben bis in den Bereich des oberen Gehäuseteils 11 geführt.

Innerhalb des Gehäuses 10 ist ein Kolben 26 auf- und abbewegbar, also in strömungsrichtung bewegbar, gelagert. Der Kolben 26 ist zu diesem Zweck auf einer Achse 27 fixiert. Der Kolben 26 ist dabei durch eine Art Nietverbindung auf der Achse 27 fixiert, in dem der Kolben 26 auf die Achse 27 gesteckt und sodann die Achse 27 am oberen Ende gestaucht wird. Der Kolben 26 wird so kraftschlüssig auf der Achse 27 fixiert. Die Achse 27 ist durch eine Bohrung im Einsatz 15, nämlich in dessen Bodenstück 17, hindurchgeführt und durch einen Sicherungsring 28 unterhalb des Bodenstücks 17 gesichert. Durch ein elastisches Element, nämlich eine Schraubenfeder 29 nach oben, also entgegen der Strömungsrichtung des Wassers, vorgespannt. Durch einen Führungsring 30 ist der Kolben 26 im Gehäuse 10, konkret am Ansatz 25 des Sitzes 21, geführt. Der Führungsring 30 sitzt dabei in einer Ringnut am Kolben 26 und ist mittels im vorliegenden Falle vier sternförmig nach außen weisenden Stegen am Ansatz 25 geführt.

Der Kolben 26 selbst weist einen sich in Strömungsrichtung erweiternden Einlaufkegel 32, einen unterhalb des Einlaufkegels 32 angeordneten zylindrischen Bereich 33 und unterhalb dieses zylindrischen Bereichs 33 einen sich in Strömungsrichtung verjüngenden kegelstumpfartigen Kolbenbereich 34 auf.

Der Durchflußmengenregler gemäß Fig. 2 ist im Prinzip genauso ausgebildet wie der Durchflußmengenregler gemäß Fig. 1. Gleiche Teile sind hier deshalb mit gleichen Bezugsziffern bezeichnet. Im übrigen wird auf die Beschreibung zu Fig. 1 verwiesen. Da der Durchflußmengenregler gemäß Fig. 2 jedoch zum Einschrauben in einen Wasserhahn anstelle eines sonst üblichen Diffusors vorgesehen ist, weist sein unterer Gehäuseteil 12 kein Gewinde auf. Vielmehr ist in dem unteren Gehäuseteil ein Siebeinsatz 35 eingesetzt, der, wie die sonst üblichen Diffusoren, für eine Anreicherung des Wassers mit Sauerstoff sorgt.

Die Wirkungsweise der Durchflußmengenregler gemäß Fig. 1 und 2 ist wie folgt:

In Folge des Wasserdrucks des einströmenden Wassers, welcher durch den Vordruck im Wasserleitungsnetz bestimmt ist, wird der Kolben 26 gegen die Kraft der Schraubenfeder 29 ist der Kolben 26 nach unten gedrückt. Bei sehr niedrigem Wasserdruck verbleibt der Kolben nahezu in seiner oberen Ruhestellung. Ist der Wasserdruck hingegen sehr groß, wird der Kolben 26 weit nach unten gedrückt. Hierdurch verkleinert sich ein Ringraum zwischen dem Kolben 26 und dem Sitz 21, genauer der Sitzfläche 24. Gleichzeitig wird das verfügbare Volumen der Mengenausgleichskammer 20 verkleinert. Durch diese Maßnahmen erhöht sich die Drosselwirkung des Durchflußmengenreglers infolge der geänderten Strömungsverhältnisse. Ein niedriger Vordruck bewirkt somit eine niedrige Drosselwirkung, ein hoher Vordruck eine hohe Drosselwirkung des Durchflußmengenreglers. Hierdurch wird die Durchflußmenge des Wassers unabhängig vom Vordruck stets konstant gehalten.

Um die vordruckunabhängige, gewünschte Durchflußmenge, beispielsweise drei Liter pro Minute, einzustellen, wird der Einlaufwiderstand für die Wasserströmung am Einlaufkegel 32 eingestellt. Dies geschieht über die Wahl des Kegelwinkels für den Einlaufkegel 32 auf empirischem Weg. Zusätzlich oder alternativ können an dem Einlaufkegel in Umfangsrichtung verlaufende Rillungen angeordnet sein, durch die der Einlaufwiderstand für die Wasserströmung ebenfalls verändert wird.

Weiteren Einfluß auf die Durchflußmenge haben die Vorspannung und Steifigkeit der Schraubenfeder 29 sowie der maximale Hub des Kolbens 26, der gleichzeitig die maximal zulässigen Druckschwankungen innerhalb der Wasserleitung für einen einwandfreien Einsatz des Durchflußmengenreglers bestimmt. Der Hub des Kolbens 26 hat in sofern einen Einfluß auf die Durchflußmenge, weil sich mit kleinerem Hub auch die Größe der Mengenausgleichskammer 20 verkleinert. Hierdurch ändert sich das Abströmverhalten des Wassers am Kolben 26 und somit das Druckgefälle über dem Kolben 26. Letztlich müssen alle Einflußgrößen für die gewünschte, vordruckunabhängige Wassermenge sorgfältig aufeinander abgestimmt werden. Dieses geschieht auf empirischem Weg.

Alle Teile des Durchflußmengenreglers sind aus lebensmittelchemisch unbedenklichen Kunststoffen oder Metallegierungen hergestellt. Konkret sind alle wasserdurchströmten Teile, wie der Führungsring 30, der Einsatz 15 und das Sieb 35, aus Kunststoff hergestellt. Die übrigen Teile sind aus Ametall hergestellt. Kalkablagerungen an Bauteilen des Durchflußmengenreglers werden hierdurch sicher vermieden. Darüber hinaus hat Ametall den .Vorteil, daß entgegen anderer Kupferlegierungen keine Zinkausspülungen zu befürchten sind.

Dadurch, daß der Führungsring 30 und der Einsatz 15 aus Kunststoff hergestellt sind, wird weiterhin eine Reibung Metall auf Metall während des Betriebs des Durchflußmengenreglers vermieden. Es reiben immer nur Kunststoff- mit Metallteilen. Hierdurch wird eine Geräuschentwicklung während des Betriebs vermieden.

### Bezugszeichenliste:

- 10: Gehäuse
- 11: Gehäuseteil
- 12: Gehäuseteil
- 13: Gewinde
- 14: Gewinde
- 15: Einsatz
- 16: Ring
- 17: Bodenstück
- 18: Steg
- 19: Ausdrehung
- 20: Mengenausgleichskammer
- 21: Sitz
- 22: Dichtung
- 23: Dichtung
- 24: Sitzfläche
- 25: Ansatz
- 26: Kolben
- 27: Achse
- 28: Sicherungsring
- 29: Schraubenfeder
- 30: Führungsring
- 31: Steg
- 32: Einlaufkegel
- 33: zylindrischer Bereich
- 34: Kolbenbereich
- 35: Sieb

## Patentansprüche

1. Durchflußmengenregler zur Regelung der Durchflußmenge von Wasser mit einem in einen Leitungsstrang oder eine Wasserarmatur einschraubbaren Gehäuse (10), wobei in dem Gehäuse (10) ein in Strömungsrichtung des Wasser beweglich gelagerter Kolben (26) angeordnet ist, der entgegen der Strömungsrichtung durch ein elastisches Element (29) belastet ist, mit folgenden Merkmalen:
a) in einem unteren Gehäuseteil (12) ist eine Mengenausgleichskammer (20) angeordnet,
b) die Mengenausgleichskammer (20) ist durch eine Ausdrehung (19) in einem Bodenstück (17) in dem unteren Gehäuseteil (12) ausgebildet,
c) der Kolben (26) ist durch einen Führungsring (30) und eine den Kolben (26) tragende Achse (27) in dem Bodenstück (17) geführt,
d) der Führungsring (30) und das Bodenstück (17) sind aus Kunststoff gebildet.

2. Durchflußmengenregler nach Anspruch 1, **dadurch gekennzeichnet, daß** in Folge der Bewegung des Kolbens (26) in Stömungsrichtung das Volumen der Mengenausgleichskammer (20) verkleinert wird.

3. Durchflußmengenregler nach Anspruch 1 oder 2, **dadurch gekennzeichnet, daß** ein unterer Kolbenbereich (34) mit einer Sitzfläche (24) zusammenwirkt, wobei der untere Kolbenbereich (34) und/oder die Sitzfläche (24) kegelstumpfartig ausgebildet sind.

4. Durchflußmengenregler nach Anspruch 3, **dadurch gekennzeichnet, daß** sich der untere Kolbenbereich (34) und/oder die Sitzfläche (24) in Strömungsrichtung verjüngen.

5. Durchflußmengenregler nach Anspruch 3 oder 4, **dadurch gekennzeichnet, daß** der untere Kolbenbereich (34) und die Sitzfläche (24) einen unterschiedlichen Kegelwinkel aufweisen.

6. Durchflußmengenregler nach einem der Ansprüche 1 bis 5, **dadurch gekennzeichnet, daß** der Kolben (26) einen kegelstumpfartig ausgebildeten Einlaufkegel (32) aufweist.

7. Durchflußmengenregler nach Anspruch 6, **dadurch gekennzeichnet, daß** der Einlaufkegel (32) in Umfangsrichtung verlaufende Rillungen aufweist.

## Claims

1. Flow regulator for regulating the rate of flow of water, having a casing (10) which can be screwed into a pipe or water fitting, where a piston (26) is arranged in the casing (10), is mounted so as to be movable in the water flow direction and is loaded against the flow direction by an elastic element (29), having the following features:
a) a rate equalisation chamber (20) is arranged in the lower casing part (12),
b) the rate equalisation chamber (20) is formed by a turned recess (19) in a base piece (17) in the lower casing part (12),
c) the piston (26) is guided by a guide ring (30) and a shaft (27) which carries the piston in the base piece (17),
d) the guide ring (30) and the base piece (17) are made of plastic.

2. Flow regulator according to Claim 1, **characterised in that**, as a consequence of the movement of the piston (26) in the flow direction, the volume of the rate equalisation chamber (20) is reduced.

3. Flow regulator according to Claim 1 or 2, **characterised in that** lower piston region (34) cooperates with a seat surface (24), the lower piston region (34) and/or the seat surface (24) having a truncated cone shape.

4. Flow regulator according to Claim 3, **characterised in that** the lower piston region (34) and/or the seat surface (24) taper in the flow direction.

5. Flow regulator according to Claim 3 or 4, **characterised in that** lower piston region (34) and the seat surface (24) have different cone angles.

6. Flow regulator according to one of Claims 1 to 5, **characterised in that** the piston (26) has an entry cone (32) having a truncated cone shape.

7. Flow regulator according to Claim 6, **characterised in that** the entry cone (32) has grooves running in the circumferential direction.

## Revendications

1. Régulateur de débits d'écoulements pour le réglage du débit d'eau avec dans une conduite flexible ou des éléments de tuyauterie hydraulique pouvant être vissé au boîtier (10), et dans le boîtier (10) dans le sens de l'écoulement de l'eau par un élément élastique (29), avec les structures suivantes :
a) dans une partie de boîtier inférieur (12) est disposée une chambre de compensation de débit (20),
b) la chambre de compensation (20) est formée par un évidemment (19) dans une pièce de fond (17) dans la partie de boîtier inférieur (12),
c) le piston (26) est dirigé par un anneau de guidage (30) et un piston (26) l'axe support (27) dans la pièce de fond (17),
d) l'anneau de guidage (30) et la pièce de fond (17) sont formées en matériau plastique.

2. Régulateur de débits d'écoulements selon la revendication 1, **caractérisé en ce que** suite au mouvement du piston (26) dans le sens de l'écoulement le volume de la chambre de compensation (20) est diminué.

3. Régulateur de débit d'écoulements selon la revendication 1 ou 2, **caractérisé en ce que** la zone inférieure du piston (34) agit avec une surface de siège (24 ) et la zone de piston inférieur (24) et/ou la surface de siège (24) formés en tronc de cône.

4. Régulateur de débit d'écoulement selon la revendication 3, **caractérisé en ce que** la zone de piston inférieur (34) et/ou la surface de siège (24) se rétrécissent dans le sens de l'écoulement.

5. Régulateurs de débit d'écoulements selon la revendication 3 ou 4, **caractérisé en ce que** la zone de piston inférieure (34) et la surface de siège (24) présentent un angle de cône différent.

6. Régulateur de débit d'écoulement selon l'une des revendications 1 à 5, **caractérisé en ce que** le piston (26) présente un cône d'entrée formée en tronc de cône (32).

7. Régulateur de quantités d'écoulements selon la revendication 6, **caractérisé en ce que** le cône d'entrée présente (32) des rainures s'étendant dans la direction d'étendue circulaire.
